(19) Europäisches Patentamt
European Patent Office
Office européen des brevets

(11) EP 1 608 118 A1

(12) DEMANDE DE BREVET EUROPEEN

(43) Date de publication:
21.12.2005 Bulletin 2005/51

(51) Int Cl.7: H04L 25/02

(21) Numéro de dépôt: 04291537.1

(22) Date de dépôt: 17.06.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(71) Demandeur: FRANCE TELECOM
75015 Paris (FR)

(72) Inventeur: Yuan-Wu, Julie
78000 Versailles (FR)

(74) Mandataire: Joly, Jean-Jacques et al
Cabinet Beau de Loménie
158, rue de l'Université
75340 Paris Cédex 07 (FR)

(54) Procédé et récepteur à estimation itérative de canal utilisant une boucle de retour (turbo-estimation)

(57) L'invention concerne un procédé de réception radiotéléphonique par turbo-estimation sur des symboles (100, 150, 200) comportant chaçun des informations correspondant à plusieurs canaux (h) et plusieurs trajets ($n_t$) par canal, dans lequel procédé on établit, au cours d'au moins une des boucles d'itération successives, une comparaison entre données reçues et données de retour, après une sélection effectuée en conservant seulement les informations correspondant à une partie des trajets ayant une amplitude plus forte relativement aux autres trajets, caractérisé en ce que l'amplitude de tels trajets au sein d'un même symbole (150) est évaluée pour cette sélection à l'aide d'une interpolation sur les amplitudes des trajets d'autres symboles (100, 200).

Signal reçu    220    Bits codés estimés    230    Bits d'information estimés

Détecteur de symboles → Décodeur de canal

Estimateur de canal    Codeur de canal

250    240

FIG.2

Récepteur itérative

EP 1 608 118 A1

## EP 1 608 118 A1

**Description**

L'invention concerne les communications radiomobiles basées sur la modulation OFDM (Orthogonal Frequency Division Multiplex) pour des paquets de données (paquets de bits codés), et notamment basées sur la modulation OFDM combinée à la technique d'accès CDMA (code division multiple access).

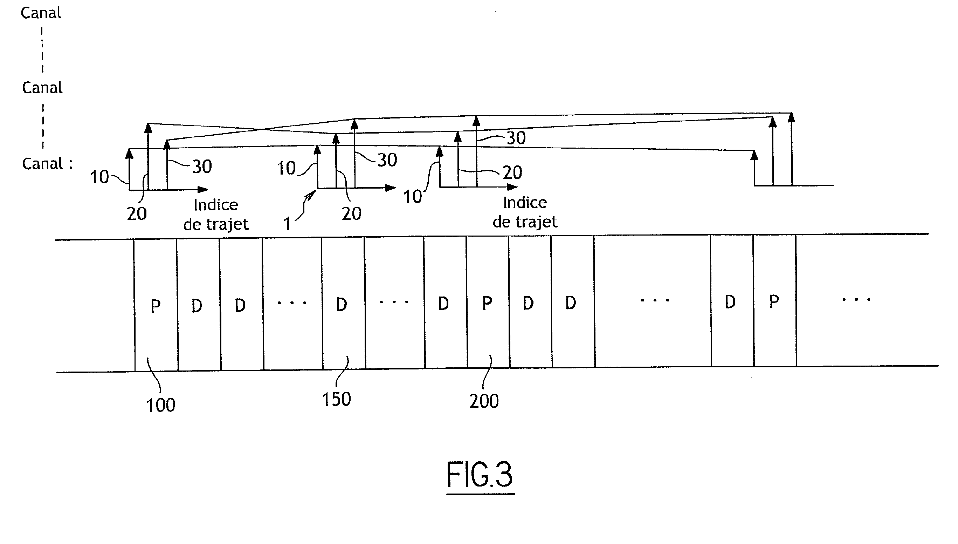

On rappellera à ce titre qu'un symbole OFDM (une des cases) est (figure 3) un groupe de données reçues à un instant considéré, correspondant à différents utilisateurs, différents canaux de propagation et différents trajets de propagation pour chaque canal.

L'association des deux techniques OFDM et CDMA forme communément ce qui est appelé dans la littérature la technique MC-CDMA (muti-carrier code division multiple access), encore connue sous les sigles OFDM-CDMA voire OFCDM (Orthogonal Frequency Coded Division Multiplexing) [1].

La présente invention a pour objet d'appliquer une estimation du canal de propagation basée sur un processus itératif, utilisant le retour de décision des bits décodés pour un système OFDM et notamment pour un système MC-CDMA dans des environnements MIMO Multi-Input Multi-Output, MISO (Multi-Input Single-Output), SIMO (Single-Input Multi-Output), diversité de transmission et simplement un environnement SISO (Single-Input Single Outpot) sur les liens montant et descendant.

Nous rappelons d'abord brièvement la problématique de l'estimation de canal, notamment dans un système MC-CDMA classique.

A cause des phénomènes de propagation, le signal émis subit d'importantes perturbations. Pour retrouver les données émises, il est nécessaire de compenser les effets dus au canal de propagation. Pour cela, il est nécessaire d'estimer les conditions de propagation et plus précisément ce que l'on appelle l'ensemble des coefficients du canal et qui correspondent à la variation d'amplitude et de phase engendrées par le canal sur chacune des sous-porteuses d'un symbole OFDM. La qualité d'estimation des coefficients des sous porteuses conditionne très fortement la qualité de restitution des données transmises par le récepteur. En effet, c'est grâce à l'estimée de chacun des coefficients du canal que sera effectuée l'égalisation du signal reçu. Ainsi, meilleures seront les estimées des coefficients du canal de propagation, meilleure sera l'égalisation et de ce fait meilleures seront les performances du système.

L'estimation de canal sur liaison montante est l'un des problèmes majeurs des systèmes MC-CDMA. En effet, si K usagers émettent simultanément, il y a alors nécessitée d'estimer K canaux de propagation différents conduisant alors à une perte d'efficacité spectrale importante du système lorsqu'une méthode classique d'estimation de canal est mise en oeuvre (méthode typiquement utilisée dans des systèmes OFDM classiques) puisque K fois plus nombreux sont les symboles dits pilotes (ou symboles préambules) devant être insérés dans la trame de transmission. La méthode proposée permet de lever cette perte d'efficacité spectrale. ([3] évoque également ce problème et propose une méthode tout autre basée sur la réciprocité du canal de propagation). De plus, même si l'estimation de canal est supposée parfaite, il est nécessaire de mettre en oeuvre en réception un principe itératif afin d'estimer au mieux les données transmises. En effet, les K signaux transmis subissant des perturbations différentes lors de leur propagation (K canaux de propagation différents), il y a une perte d'orthogonalité entre les signaux conduisant à une augmentation du terme d'accès multiple importante nécessitant alors de mettre en oeuvre un procédé itératif d'annulation d'interférence afin d'améliorer les performances. La méthode proposée utilise également ce principe d'annulation d'interférence itérative mais le procédé itératif en luimême n'apporte pas de caractère innovant.

L'invention répond au problème de la réduction en efficacité spectrale des méthodes classiques.

La technique proposée améliore les performances de l'estimation de canal et, dans le cas du lien montant, permet d'augmenter la charge du système (ou capacité, c'est-à-dire le nombre d'usagers transmettant simultanément dans le système).

On propose à cet effet un procédé de réception radiotéléphonique par turbo-estimation sur des symboles comportant chacun des informations correspondant à plusieurs canaux et plusieurs trajets par canal, dans lequel procédé on établit, au cours d'au moins une des boucles d'itération successives, une comparaison entre données reçues et données de retour, après une sélection effectuée en conservant seulement les informations correspondant à une partie des trajets ayant une amplitude plus forte relativement aux autres trajets, caractérisé en ce que l'amplitude de tels trajets au sein d'un même symbole est évaluée pour cette sélection à l'aide d'une interpolation sur les amplitudes des trajets d'autres symboles

On propose également selon l'invention un dispositif de réception radiotéléphonique par turbo-estimation sur des symboles comportant chacun des informations correspondant à plusieurs canaux et plusieurs trajets par canal, comportant des moyens qui établissent, au cours d'au moins une des boucles d'itération successives, une comparaison entre données reçues et données de retour, après une sélection effectuée en conservant seulement les informations correspondant à une partie des trajets ayant une amplitude plus forte relativement aux autres trajets, caractérisé en ce que le dispositif inclut des moyens qui évaluent l'amplitude de tels trajets au sein d'un même symbole pour cette sélection à l'aide d'une interpolation sur les amplitudes des trajets d'autres symboles.

Sous un aspect préféré de l'invention, on met en oeuvre une étape supplémentaire consistant, au sein d'une

2

itération donnée, à tenir compte d'un ensemble d'évaluations de canal, chacune effectuée sur un symbole différent et à interpoler ces évaluations de canal pour établir une nouvelle estimation de canal en une série de symboles tenant compte des évaluations de canal effectuées sur des symboles voisins.

D'autres caractéristiques, buts et avantages de l'invention apparaîtront à la lecture de la description détaillée qui va suivre, faite en référence aux figures annexées sur lesquelles :

- la figure 1 représente une structure de trame de symboles OFDM ;
- la figure 2 représente une structure de récepteur à turbo-estimation ;
- la figure 3 illustre un mode de mise en oeuvre d'une interpolation selon l'invention ;
- la figure 4 représente un mode de mise en oeuvre d'une interpolation selon une autre variante de l'invention.

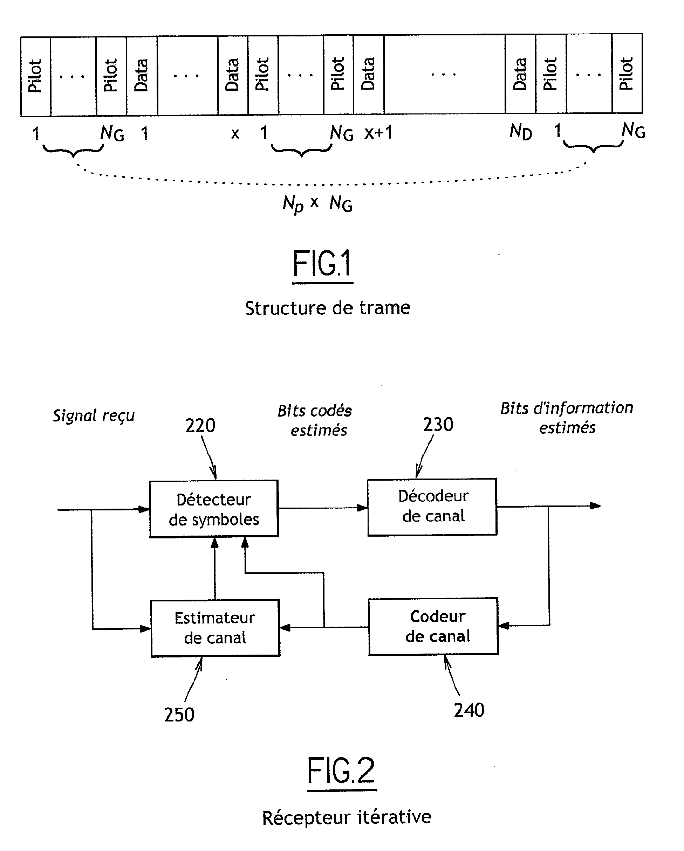

Un paquet de données (figure 1) est transmis dans une ou plusieurs trames qui contiennent, chacune, un certain nombre de symboles OFDM consécutifs. La variation temporelle d'un symbole OFDM à un autre dans une trame peut être plus ou moins importante en fonction de la vitesse de déplacement du terminal radio mobile. De plus, l'accès multiple pour le lien montant entre différents usagers utilisant une même bande de transmission ou l'application de la technique MIMO sur un système, impose des estimations des canaux de transmission différents. Ainsi l'estimation de canal est un des problèmes majeurs de la technique MC-CDMA sur liaison montante (terminal mobile vers station de base) et des systèmes MC-CDMA MIMO sur liaison montante ou descendante (station de base vers terminal mobile).

D'une façon générale, on réserve certaines sous porteuses de certains symboles OFDM, symboles dits symboles pilotes véhiculant des signaux connus du récepteur (en localisation et valeur) ou symboles préambules consistant à allouer des symboles OFDM entiers. La répartition de ces symboles servant à l'estimation des canaux de propagation peuvent être soit de type aléatoire, diagonale, en quelconque, répartis ou continus (préambules) ...Chaque symbole est alors espacé respectivement en temps et en fréquence d'une valeur $\Delta t$ et $\Delta f$ dépendante du temps et de la bande de cohérence du canal de propagation. Le but étant d'utiliser le moins de symboles pilotes possible afin de ne pas entacher fortement la perte en efficacité spectrale du système. Il y a alors un compromis à faire entre le nombre de symboles pilotes et les performances du système puisque plus un système possèdera de symboles pilotes insérés, meilleure sera l'estimée du canal mais moins bonne sera l'efficacité spectrale. Puis entre deux estimées fréquentielles et temporelles effectuées, il est possible de connaître globalement l'ensemble des coefficients du canal de propagation (ensemble des porteuses de tous les symboles OFDM) par application d'interpolations fréquentielles et/ou temporelles. En cas d'accès multiple ou d'antennes d'émission multiples, chaque utilisateur ou chaque antenne utilise des répartitions temps-fréquence de pilotes bien distinctes (MC-CDMA) et des répartitions spatiales-temporelles et/ou spatiales-fréquentielles distinctes (composante MIMO en plus).

Plus particulièrement, on va s'intéresser au cas où toutes les sous porteuses d'un symbole OFDM, nommé symbole OFDM pilote (ou de préambule), sont utilisées par un utilisateur donné ou une antenne donnée; plusieurs utilisateurs ou plusieurs antennes peuvent surcharger un même symbole OFDM pilote en employant différentes séquences (ou codes) par sous porteuses d'un symbole OFDM. L'estimation des coefficients de canal pour un symbole OFDM pilote peut être réalisée par l'algorithme à maximum de vraisemblance (ou minimiser MSE (Mean-Square Error) algorithme dans [2]) afin de retrouver dans un premier temps le profil du canal de propagation, réponse impulsionnelle du canal, de chaque utilisateur ou de chaque antenne; et ensuite nous obtenons les coefficients du canal de chacun par transformée de Fourier directe (FFT). L'estimation des coefficients du canal pour les symboles OFDM de donnée, symboles OFDM réservés à la transmission des données, devient une interpolation temporelle.

Considérons tout d'abord, le cas général d'un système SISO pour le lien descendant ou pour le lien montant considérant un système mono-utilisateur, le symbole OFDM pilote est un signal constant sur toutes les sous porteuses exprimé par:

$$S_P(n_c) = \alpha, \qquad n_c = 0,..., N_C - 1 \tag{1}$$

où $N_C$ est le nombre de sous porteuses modulées du signal. Si nous appliquons une transformée de Fourier inverse sur les Nc porteuses du $S_P(n_c)$ nous obtenons:

$$s_P(n_t) = \sum_{n_c=0}^{N_C-1} S_P(n_c) \exp(-j2\pi n_c n_t / N_C)$$

$$= \sum_{n_c=0}^{N_C-1} S_P(n_c) W^{n_c n_t}$$

$$n_t = 0, \ldots, N_C - 1 \qquad (2)$$

avec $W = \exp(-j2\pi/N_C)$, nous obtenons une fonction "Dirac": $N_C \times \alpha$ à $n_t=0$ et zéro ailleurs.

Quand le symbole OFDM pilote passe à travers un canal à trajets multiples, en supposant des trajets constants dans la durée d'un symbole OFDM, la fonction $s_P(n_t)$ devient $h(n_t)$, avec un facteur multiplicatif près, la réponse impulsionnelle du canal appelée aussi profil des retards. $h(n_t)$ possède des valeurs non nulles dans une fenêtre de $D_{spread}$ échantillons consécutifs.

A noter qu'un émetteur OFDM applique toujours une IFFT (Inverse Fast Fourier Transformation) et introduit un intervalle de garde par répétition d'une partie de signal servant à absorber l'interférence entre symboles lorsque celui-ci est choisi supérieur à la réponse impulsionnelle du canal de propagation. De plus, un récepteur OFDM applique toujours une FFT (Fast Fourier Transformation) sur le signal reçu après avoir éliminé, par filtrage, la partie du signal inclus dans l'intervalle de garde. La taille de l'IFFT ou de la FFT est notée $N_{FFT}$. Nous avons $N_c \leq N_{FFT}$. Ainsi quand on parle de signal reçu (ou pilote reçu), il s'agit du signal (ou pilote) après la FFT, qui est pris dans le domaine fréquentiel. En appliquant une transformée de Fourier sur le pilote reçu avec Nc échantillons fréquentiels, nous pouvons obtenir les $D_{spread}$ échantillons dans le domaine temporel de $h(n_t)$.

Nous considérons le cas où plusieurs usagers émettent simultanément (cas multi utilisateurs, ou cas multi antennes d'émission) et nous utilisons, pour chaque utilisateur (ou pour chaque antenne d'émission) partageant le même pilote, le signal suivant:

$$S_P(n_c, k) = \alpha b(n_c) \exp(-j2\pi n_c D(k)/N_C), \qquad n_c = 0, \ldots, N_C - 1$$

$$= \alpha b(n_c) W^{n_c D(k)}$$

$$(3)$$

où $D(k)$ est le retard introduit pour le k-ième utilisateur (ou antenne d'émission) et que la séquence $b(n_c)$ respecte $|b(n_c)| = 1$.

L'introduction de la séquence $b(n_c)$ donne un aspect plus général sur le symbole dit pilote. A la réception nous allons enlever l'effet de cette séquence par la multiplication de la séquence complexe conjuguée $b(n_c)^*$. Ainsi nous pouvons imaginer que différentes séquences sont attribuées aux différentes cellules dans un réseau mobile cellulaire.

On doit s'assurer qu'entre les retards de deux utilisateurs consécutifs, l'écart doit être supérieur ou égale à $D_{spread}$ et que $D(k) + D_{spread}$ soit inférieur ou égal à $N_C$. D'une façon pratique, nous choisissons:

$$D(k) = (k-1) D_{spread} \qquad k = 1, \ldots, K_1 \qquad (4)$$

où $K_1$ est nombre maximum d'utilisateurs par symbole pilote (ou de préambule) autorisé:

$$K_1 = \lfloor N_C / D_{spread} \rfloor \qquad (5)$$

Le signal reçu du symbole OFDM pilote sans bruit est le suivant :

$$S_p(n_c) = \sum_{k=1}^{K_1} S_p(n_c, k) H_p(n_c, k) \qquad (6)$$

où $H_p(n_c, k)$ sont les coefficients du canal du k-ième utilisateur. Bien sûr, nous avons besoin de plusieurs symboles OFDM pilotes bien espacés pour un utilisateur donné; mais la forme du signal reste la même. Nous supposons que le nombre de symboles OFDM pilotes est $N_P$. Si nous voulons augmenter le nombre d'utilisateurs émettant dans un système MC-CDMA, nous devons réserver d'autres symboles OFDM pour l'émission des pilotes. En considérant le nombre maximum d'utilisateurs K divisé par $K_1$, en notant $N_G=K/K_1$, nous pouvons utiliser la structure de la figure 1 constituée de $N_G$ symboles OFDM pilotes successifs et de x symboles OFDM de donnée successifs. Un utilisateur n'utilise que les symboles pilotes de même numéro et envoie ses données dans tous les symboles OFDM de données (Data).

Le signal de pilotes reçu est:

$$R_p(n_c)=S_p(n_c)+Z(n_c), \qquad n_c=0,...,N_C\text{-}1 \tag{7}$$

où $Z(n_c)$ est le bruit blanc gaussien. La façon de construire le signal de pilotes nous conduit directement à faire:

$$U_P(n_c,k) = R_p(n_c).(1/\alpha)^2 .S_P(n_c,k)^*, \qquad n_c = 0,...,N_C-1, \ k=1,...,K_1$$
$$= R_p(n_c).(1/\alpha).b(n_c)^* \exp(j2\pi n_c D(k)/N_C) \tag{8}$$

et à appliquer la transformée de Fourier inverse sur les $N_C$ porteuses du $U_P(n_c,k)$ pour obtenir le signal sortant:

$$\hat{h}_p(n_t,k) = \sum_{n_c=0}^{N_C-1} U_P(n_c,k)\ W^{-n_c n_t}, \qquad n_t \in \boldsymbol{D}_{\text{spread}} \tag{9}$$

avec $\boldsymbol{D}_{\text{spread}}$ correspondant à la zone des sous porteuses du profil de retard. Ce signal sortant est le profil de retard du k-ième utilisateur (ou antenne d'émission), avec une certaine contribution de bruit. Dans la zone $\boldsymbol{D}_{\text{spread}}$, nous choisissons une sous-zone $\boldsymbol{D'}_{\text{spread}} \in \boldsymbol{D}_{\text{spread}}$ qui élimine l'effet de bord entre utilisateurs voisins et qui contient $D'_{spread}$ échantillons. Sur ces $D'_{spread}$ échantillons, nous sélectionnons les $N_T$ plus importants échantillons en amplitude. Les coefficients du canal du k-ième utilisateur sont obtenus en appliquant la transformée de Fourier sur ces $N_T$ échantillons (ou trajets):

$$\hat{H}_p(n_c,k) = \sum_{n_t} \hat{h}_p(n_t,k)\ W^{n_c n_t}, \quad n_t \in \boldsymbol{N}_T(k), \quad k=1,...K_1 \tag{10}$$

avec $\boldsymbol{N}_T(k)$ qui correspond aux positions de trajets sélectionnés du k-ième utilisateur.

La re-génération des coefficients de canal du k-ième utilisateur est obtenue en interpolant les coefficients du canal obtenu via les symboles pilotes entre chaque sous porteuse.

On rappelle que l'invention se place, dans cet exemple, dans un contexte MIMO, MISO, SIMO, diversité de transmission et SISO considérant un système multiporteuse multi utilisateurs, ou tout simplement dans un système OFDM.

La façon de construire les symboles OFDM pilotes et de re-générer les coefficients du canal à partir des symboles pilotes reçus permet d'appliquer la méthode d'estimation de canal décrite dans cette session. Nous commentons la façon de construire et de récupérer les symboles OFDM pilotes (préambules) avec un récepteur itératif. Ce procédé donne d'excellentes performances surtout quand le système MC-CDMA est en pleine charge (voir les tableaux 1 et 2, K=16).

En considérant naturellement que le détecteur de symboles de modulation est également itératif, la figure 2 donne la structure du récepteur.

Rappelons qu'un récepteur OFDM applique toujours une FFT (Fast Fourier Transformation) sur le signal reçu après avoir éliminé, par filtrage, la partie du signal inclus dans l'intervalle de garde et servant à absorber l'interférence entre symboles lorsque celui-ci est choisi supérieur à la réponse impulsionnelle du canal de propagation. Ainsi quand on parle de signal reçu, il s'agit du signal après FFT, pris dans le domaine fréquentiel.

A la première itération, la méthode d'estimation de canal est décrite dans le paragraphe précédent. Elle permet de définir une première estimation des canaux de chaque utilisateur à partir de symboles OFDM pilotes. Cette estimation va servir à détecter les symboles de données.

Avant les itérations suivantes, nous devons reprendre le signal $\hat{h}_p(n_t,k)$, $n_t \in D'_{spread}$ de l'Eq (9) avec $D'_{spread}$ à la place de $D_{spread}$ Pour le k-ième utilisateur, à chaque trajet $n_t$, nous appliquons une interpolation temporelle à partir des signaux $h_p(n_t,k')$, $k'=\text{mod}(k-1,K_1)+1$, des $N_P$ symboles OFDM pilotes et nous obtenons, pour le symbole OFDM de donnée d'indice $m$, l'estimée du profil des retards $h(m,n_t,k)$.

Ensuite, nous sélectionnons les $N_T$ plus importants trajets parmi les $D'_{spread}$ existants; et enfin nous enregistrons les indices des trajets les plus importants dans le tableau: $T_T(l,k,m)$, $l=1,...,N_T$, $k=1,...,K$ et $m=1,...,N_D$. Cette façon de générer le tableau des indices des trajets sélectionnés fait partie de l'invention. Nous pouvons aussi imaginer qu'elle évolue au fur et à mesure de la progression des itérations.

En d'autres termes, en référence à la figure 3, l'itération venant d'aboutir a permis d'identifier différents trajets, et ce au sein de chaque symbole pilote. Ces trajets, représentés au nombre de trois par canal pour simplifier l'illustration, sont référencés 10, 20 et 30 sur cette figure. Chaque trajet présente une amplitude différente et cette amplitude varie au cours du temps, c'est à dire au passage d'un symbole pilote 100 au symbole pilote 200 qui le suit.

A un symbole de données 150 considéré en un endroit quelconque entre les deux symboles pilotes 100 et 200, les trajets 10, 20, 30 d'un canal considéré vont présenter des amplitudes respectives qui sont différentes à la fois des amplitudes rencontrées au symbole pilote 100 et au symbole pilote 200.

On propose ici de réaliser une interpolation sur les amplitudes des différents trajets considérés aux symboles pilotes pour en déduire l'amplitude de chaque trajet en un symbole de données considéré 150.

Cette interpolation est représentée à la figure 3 sous la forme d'une interpolation linéaire basée sur les deux symboles pilotes 100 et 200 encadrant le symbole de données 150 considéré.

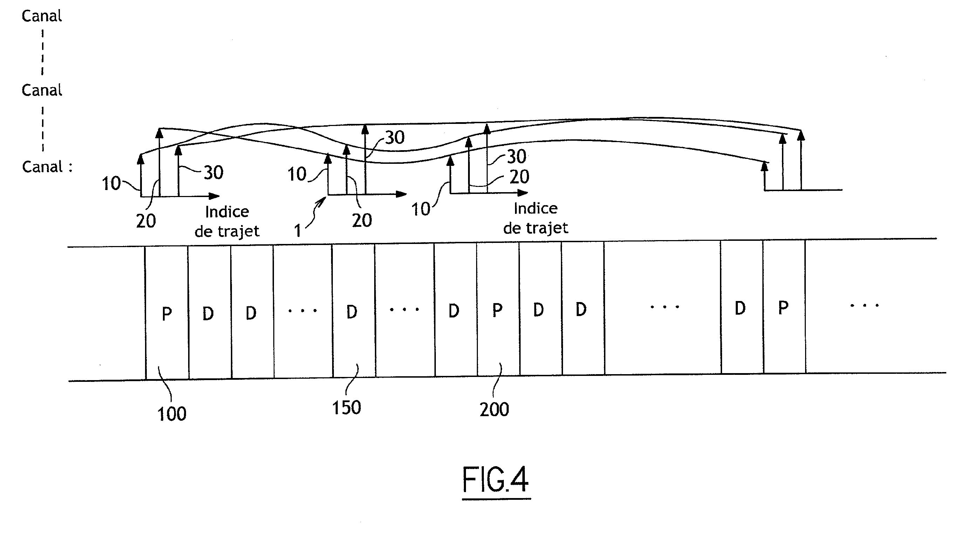

Toutefois cette interpolation peut également être basée sur une multiplicité de symboles pilotes, par exemple grâce à une interpolation de type polynominale (figure 4).

Après interpolation, on peut réaliser une sélection sur les trajets ainsi estimés au niveau du symbole de données 150 considéré. Ainsi, dans l'exemple de la figure 3, seul le trajet 30 est sélectionné car il présente l'amplitude la plus élevée.

On ne retiendra typiquement qu'un tiers des trajets en présence, en ne retenant que les trajets aux amplitudes les plus élevées.

Une fois les indices de ces trajets ainsi sélectionnés, ces indices sont considérés comme correspondant aux informations reçues les plus révélatrices pour le canal considéré, au sein du symbole de données 150.

Ce sont ces informations sélectionnées, c'est à dire celles véhiculées sur les trajets ayant les indices sélectionnés, qui seules vont être prises en compte pour l'estimation de canal.

Pour cela, la sélection sur les indices de trajets ainsi identifiés est effectuée à la fois au sein des données reçues et des données de retour telles que prises en compte pour l'estimation de canal à l'itération précédente.

Tel que représenté à la figure 2, le récepteur présente un détecteur de symboles 220, un décodeur de canal 230, un codeur de canal 240 et un estimateur de canal 250.

L'estimateur de canal fait donc une comparaison des informations aux trajets, qui au sein de chaque symbole, ont été sélectionnés comme particulièrement révélatrices pour le canal considéré.

Cette sélection des indices de trajets où les données reçues et de retour vont être prises en compte, peut être réalisée pour chacun des symboles OFDM de données traitées dans l'itération, pour révéler le plus finement l'évolution du canal au cours du temps.

A l'itération suivante, le canal ainsi estimé va être utilisé pour fournir de nouvelles données de retour, qui à leur tour, vont être comparées aux données reçues conformément au principe de la turbo estimation. La sélection de trajets par interpolation peut être renouvelée à chaque itération afin de ne traiter que des informations significatives au niveau de l'estimateur de ce canal.

Comme on le décrira par la suite, à chaque itération on effectue en outre avantageusement une interpolation supplémentaire. Celle-ci a lieu après comparaison des données de retour et reçues telles que sélectionnées par interpolation sur les indices de trajets, c'est à dire après obtention d'une estimée de canal déduite de cette comparaison à partir des trajets sélectionnés.

On interpole donc, dans cette étape supplémentaire, les estimées de canal ainsi obtenues à cette itération sur l'ensemble des symboles de données et des symboles pilotes traités.

On déduit, par cette itération, les canaux de transmission sur chacun des symboles restants.

Il s'agit en d'autres termes d'obtenir des estimées de canaux sur un groupe de symboles restants, de manière à les placer sur un tracé d'interpolation d'ensemble.

Cette interpolation supplémentaire peut, en outre, être utilisée pour remodeler les estimées obtenues sur un groupe de symboles de manière à les replacer sur un tracé d'interpolation d'ensemble.

A cet effet, on réalise, sur ces estimées, une interpolation de type polynominale, que l'on décrira ci-après dans le cas d'une variante où cette interpolation particulière est de type fréquentielle, c'est à dire un traitement par groupes de sous-porteuses de même indice visant une interpolation temporelle conforme à celle qu'on a décrite précédemment. L'interpolation peut également être temporelle, c'est à dire un traitement par groupes de trajets de même indice visant une interpolation temporelle. A la fin de cette étape, le canal évolué, noté H est donc appliqué dans la même itération pour démoduler les données reçues.

Les avantages de l'interpolation de sélection de trajets et les avantages de cette seconde interpolation sur les estimées de canal se combinent. Ils sont toutefois avantageux lorsqu'implémentés indépendamment l'un de l'autre.

On décrira maintenant ces différentes étapes de traitement de manière plus détaillée, conformément à l'exemple d'implémentation ci-dessous.

Pour un numéro d'itération supérieur à un, à chaque symbole OFDM de donnée m, nous calculons pour cela le signal de corrélation:

$$p(l,k) = \sum_{n_c=0}^{N_C-1} R(n_c) S_{fb}^*(n_c,k) W^{-n_c T_T(l,k,m)}, \; l=1,...,N_T \text{ et } k=1,...,K \; , \quad (11)$$

où $R(n_c)$ est le signal reçu de symbole OFDM de donnée et le signal $S_{fb}(n_c,k)$ est le signal reconstruit pour la $n_c$-ième sous porteuse et le k-ième utilisateur à partir du signal de retour de décision. Nous obtenons alors le vecteur de corrélation à $K. N_T$ éléments:

$$P = (p(1,1),...,p(N_T,1),...,p(1,K),...p(N_T,K))^T \; ; \quad (12)$$

Nous calculons aussi le signal d'auto-corrélation du signal de retour de décision:

$$q(l_1,l_2,k_1,k_2) = \sum_{n_c=0}^{N_C-1} S_{fb}(n_c,k_1) S_{fb}^*(n_c,k_2) W^{-n_c(T_T(l_1,k_1,m)-T_T(l_2,k_2,m))} \quad (13)$$

$$l_1,l_2 = 1,...,N_T \text{ et } k_1,k_2 = 1,...,K$$

et la matrice d'auto-corrélation à $((K.N_T).(K.N_T))$ éléments :

$$\mathbf{Q} = \begin{pmatrix} q(1,1,1,1) & ... & q(1,N_T,1,1) & ... & q(1,1,K,1) & ... & q(1,N_T,K,1) \\ ... & & ... & & ... & & ... \\ q(N_T,1,1,1) & ... & q(N_T,N_T,1,1) & & q(N_T,1,K,1) & ... & q(N_T,N_T,K,1) \\ ... & & ... & ... & & & ... \\ q(1,1,1,K) & ... & q(1,N_T,1,K) & ... & q(1,1,K,K) & ... & q(1,N_T,K,K) \\ ... & & ... & & & & ... \\ q(N_T,1,1,K) & ... & q(N_T,N_T,1,K) & ... & q(N_T,1,K,K) & ... & q(N_T,N_T,K,K) \end{pmatrix}$$

$$(14)$$

Nous calculons ensuite les amplitudes complexes des trajets sélectionnés:

$$\hat{h} = Q^{-1} P = (\hat{h}(1,1),...,\hat{h}(N_T,1),...\hat{h}(l,k),...,\hat{h}(1,K),...,\hat{h}(N_T,K))^T \quad (15)$$

Pour que $\mathbf{Q}^{-1}$ existe, l'inégalité suivante doit être respectée:

$$N_T.K \le N_C \qquad (16)$$

L'équation (16) conduit directement à $N_T \le D_{spread}/N_G$ avec $D_{spread} = N_C/K_1$ ; si $N_G$ est supérieur à 1 et que le nombre d'utilisateurs est supérieur à $K_1$, le nombre de plus importants trajets $N_T$ est obligatoirement inférieur à $D_{spread}$. Ainsi le mode de réalisation décrit ici propose une solution. Bien sûr en tout cas le mode de réalisation qui permet d'avoir $N_T < D_{spread}$ permet de diminuer la perturbation du bruit.

Toujours pour le m-ième symbole OFDM de donnée, l'estimation préliminaire des coefficients du canal du k-ième utilisateur est obtenu en appliquant la transformée de fourier sur ces $N_T$ trajets:

$$\hat{H}'(n_c,k) = \sum_{l=1}^{N_T} \hat{h}(l,k) W^{n_c T_T(l,k,m)}, \qquad n_c = 0,...,N_C - 1 \ \text{et} \ k = 1,...K \qquad (17)$$

Finalement, à chaque sous porteuse et pour chaque utilisateur, en appliquant une interpolation sur les coefficients préliminaires du canal obtenus pour tous les symboles OFDM (pilotes et de données), nous obtenons les coefficients de canal pour chaque symbole OFDM de donnée.

Pour toutes les itérations et tous les utilisateurs, nous cherchons à connaître la valeur complexe du canal dans le domaine fréquentiel ($H(n_c,k)$) ou dans le domaine temporel ($h(l,k)$) de chaque symbole OFDM de donnée situé à la position m. Nous pouvons alors utiliser l'interpolation polynomiale suivante afin de déduire, à partir des valeurs des symboles connus, les estimées de l'ensemble des coefficients du canal de propagation:

$$f(m) = C_{N_p-1} m^{N_p-1} + C_{N_p-2} m^{N_p-2} + ... + C_1 m + C_o \qquad (18)$$

avec $C_{n_p}$, $n_p = 1,...N_p$ , les coefficients du polynôme; et $f(m)$, la valeur du canal à l'indice m.

Pour avoir un aspect général, nous avons omis toutes les variables $n_c$, $l$, k. L'indice m peut être celui des symboles pilotes $\{m_P(n_p,n_g)\}$, $n_p=1,...N_P,n_g=1,...N_G$, ou des symboles de donnée $\{m_D(n_d)\}$ $n_d = 1,...N_D$.

Lors de la première itération, nous ne disposons que les symboles OFDM pilotes. Pour retrouver le vecteur des coefficients du polynôme $(C_{N_p-1}, C_{N_p-2}, ...,C_0)^T$, nous appliquons l'équation suivante:

$$\begin{pmatrix} C_{N_P-1} \\ C_{N_P-1} \\ ... \\ C_0 \end{pmatrix} = \Pi_1(n_g) \begin{pmatrix} f(m_P(1)) \\ f(m_P(2)) \\ .. \\ f(m_P(N_p)) \end{pmatrix} \qquad (19)$$

avec

$$\Pi_1(n_g) = \begin{pmatrix} (m_P(1,n_g))^{N_P-1} & (m_P(1,n_g))^{N_P-2} & ... & m_P(1,n_g) & 1 \\ (m_P(2,n_g))^{N_P-1} & (m_P(2,n_g))^{N_P-2} & & m_P(2,n_g) & 1 \\ ... & & & & ... \\ (m_P(N_P,n_g))^{N_P-1} & (m_P(N_P,n_g))^{N_P-2} & ... & m_P(N_P,n_g) & 1 \end{pmatrix}^{-1}$$

Disposant de l'ensemble des coefficients nous pouvons alors calculer toutes les valeurs du canal f(.) pour tous les indices $m_D(n_d)$, $n_d = 1,...N_D$.

Dans les itérations suivantes, nous disposons des symboles pilotes et aussi des symboles de donnée de retour. Pour retrouver le vecteur $(C_{N_p-1}, C_{N_p-2}, ..., C_0)^T$, nous appliquons l'équation suivante:

$$\begin{pmatrix} C_{N_P-1} \\ C_{N_P-1} \\ ... \\ C_0 \end{pmatrix} = \Pi_{iter}(n_g) \begin{pmatrix} f(m_P(1)) \\ ... \\ f(m_P(N_p)) \\ f(m_D(1)) \\ ... \\ f(m_D(N_D)) \end{pmatrix} \qquad (20)$$

avec

$$\Pi_{iter}(n_g) = (M_{n_g}{}^T M_{n_g})^{-1} M_{n_g}{}^T,$$

et

$$M_{n_g} = \begin{pmatrix} (m_P(1,n_g))^{N_P-1} & (m_P(1,n_g))^{N_P-2} & ... & m_P(1,n_g) & 1 \\ ... & ... & & & ... \\ (m_P(N_P,n_g))^{N_P-1} & (m_P(N_P,n_g))^{N_P-2} & & m_P(N_P,n_g) & 1 \\ (m_D(1))^{N_P-1} & (m_D(1))^{N_P-2} & & m_D(1) & 1 \\ ... & & & & ... \\ (m_D(N_D))^{N_P-1} & (m_D(N_D))^{N_P-2} & & m_D(N_D) & 1 \end{pmatrix}$$

De même, ayant cet ensemble des coefficients, nous pouvons alors calculer toutes les valeurs du canal f(.) pour tous les indices $m_D(n_d)$, $n_d = 1,...N_D$.

Les matrices $\Pi_1(n_g)$ de taille ($N_P$ x $N_P$) et $\Pi_{iter}(n_g)$ de taille ($N_P$ x $N_P+N_D$) avec $n_g = 1,...N_G$ sont pré-calculées avant toutes opérations et enregistrées dans des fichiers de données.

La méthode de calcul du vecteur $(C_{N_p-1}, C_{N_p-2}, ..., C_0)^T$ correspondant aux coefficients du polynôme lors de l'application du processus de retour de décision (équation (20)) et l'association de cette méthode à celle servant à obtenir les estimations préliminaires des coefficients du canal $H'(n_c,k)$ des symboles de donnée (l'équation (17)) sont avantageuses en soi. Ainsi nous cherchons les valeurs du canal dans le domaine fréquentiel avec $f(.) = H'(n_c,k)$ pour les- symboles de donnée et $f(.) = H_p(n_c,k)$ pour les symboles pilotes.

Nous avons appliqué l'invention notamment au lien montant multi utilisateurs dans un système MC-CDMA pour la transmission de données (terminal mobile vers station de base), avec un facteur d'étalement (longueur du code CDMA) égal à 16, un nombre d'utilisateurs maximum K = 16, un nombre de sous porteuses $N_C$ = 736 et une modulation de type modulation à quatre états de phase. La trame utilisée contient $N_D$ = 21 symboles de donnée et 8 symboles OFDM pilotes. Le canal de propagation est un canal radio mobile de type BRAN_E (Broadband Radio Access Network channel E), où le mobile se déplace à la vitesse de 60Km/h, conduisant à prendre $D_{spread}$=92, le nombre d'utilisateurs par symbole pilote est $K_1$=8, le nombre de symbole OFDM pilotes successifs est $N_G$ = 2 permettant de supporter alors un système à 16 utilisateurs, le nombre de symboles OFDM pilotes par groupe d'utilisateurs dans et par trame est $N_P$ = 4. Les symboles OFDM de donnée sont regroupés 7 par 7. Nous avons choisi le nombre de trajets importants $N_T$=30. Le codeur de canal choisi est de type convolutif , identique à celui utilisé en UMTS (Universal Mobile Telecommunication System) et de rendement ½ (il pourrait être intéressant d'utiliser un turbo codeur-décodeur de canal afin d'améliorer les performances du système). Nous utilisons itérativement un détecteur à annulation d'interférence parallèle (PIC: Parallel Interference Cancellation) comme détecteur de symboles associé au principe de retour de décision prise en sortie du décodeur du canal et l'estimateur décrit dans §3 (l'invention).

Les tableaux 1 et 2 donnent les performances obtenues avec le détecteur PIC fonctionnant avec ((nb_pic_iter+1) . (nb_est_iter+1)) itérations et l'estimateur de canal fonctionnant avec (nb_est_iter+1) itérations. Ces résultats sont obtenus avec $D'_{spread}$=82.

Tableau 1:

| BER (Bit Error Rate) Performance | | | | | |
|---|---|---|---|---|---|
| Eb/N 0 (dB) | BER K=2 nb_pic_iter =1 nb_est_iter =2 | BER K=8 nb_pic_iter =1 nb_est_iter =2 | BER K=8 nb_pic_iter =1 nb_est_iter =3 | BER K=16 nb_pic_iter =5 nb_est_iter =1 | BER K=16 nb_pic_iter =5 nb_est_iter =2 |
| 6 | 1.37e-3 | | | | |
| 7 | | 1.16e-3 | 6.15e-4 | | |
| 13 | | | | | 2.77e-2 |
| 15 | | | | 6.06e-3 | 3.45e-3 |

Tableau 2:

| FER (Frame Error Rate) Performance | | | | | |
|---|---|---|---|---|---|
| Eb/N 0 (dB) | FER $K$=2 nb_pic_iter =1 nb_est_iter =2 | FER $K$=8 nb_pic_iter =1 nb_est_iter =2 | FER $K$=8 nb_pic_iter =1 nb_est_iter =3 | FER $K$=16 nb_pic_iter =5 nb_est_iter =1 | FER $K$=16 nb_pic_iter =5 nb_est_iter =2 |
| 6 | 2.13e-2 | | | | |
| 7 | | 1. 58e-2 | 1.08e-2 | | |
| 13 | | | | | 1.02e-1 |
| 15 | | | | 4.42e-2 | 1.76e-2 |

**Réferences**

- [1] YEE (N.), LINNARTZ (J.P.), FETTWEIS (G.). Multicarrier CDMA in indoor wireless radio networks. *Proceedings of IEEE PIMRC'93*, pp 109-113, Yokohama, Japan, (1993).
- [2] Y. Li and N. Seshadri "Channel estimation for OFDM systems with transmitter diversity in mobile wireless channels" IEEE, JSAC, vol. 17 N°3 March 1999, pp461-471.
- [3] D. Mottier and D. Castelain "SINR-BASED CHANNEL PRE-EQUALIZATION FOR UPLINK MULTI-CARRIER CDMA SYSTEMS" *Proceedings of IEEE PIMRC*'02. 15-18 September 2002 Lisboa Portugal

**Revendications**

1. Procédé de réception radiotéléphonique par turbo-estimation sur des symboles (100, 150, 200) comportant chacun des informations correspondant à plusieurs canaux (h) et plusieurs trajets ($n_t$) par canal, dans lequel procédé on établit, au cours d'au moins une des boucles d'itération successives, une comparaison entre données reçues et données de retour, après une sélection effectuée en conservant seulement les informations correspondant à une partie des trajets ayant une amplitude plus forte relativement aux autres trajets, **caractérisé en ce que** l'amplitude de tels trajets au sein d'un même symbole (150) est évaluée pour cette sélection à l'aide d'une interpolation sur les amplitudes des trajets d'autres symboles (100, 200).

2. Procédé selon la revendication 1, **caractérisé en ce que** l'interpolation est effectuée sur la base des amplitudes de trajets de symboles pilotes respectivement précédant (100) et suivant (200) temporellement le symbole de données considéré (150).

3. Procédé selon la revendication 1 ou la revendication 2, **caractérisé en ce que** l'interpolation est une interpolation linéaire.

4. Procédé selon l'une quelconque des revendications précédentes, **caractérisé en ce que** l'interpolation est une interpolation polynomiale.

**5.** Procédé selon l'une quelconque des revendications précédentes, **caractérisé en ce qu'**on met en oeuvre une estimation à partir des informations de trajet sélectionnés, qui fait appel aux formules suivantes :

$$\hat{h} = Q^{-1} P = (\hat{h}(1,1),...,\hat{h}(N_T,1),...\hat{h}(l,k),...,\hat{h}(1,K),...,\hat{h}(N_T,K))^T$$

avec

$$P = (p(1,1),...,p(N_T,1),...,p(1,K),...p(N_T,K))^T \tag{12}$$

où

$$p(l,k) = \sum_{n_c=0}^{N_C-1} R(n_c) S_{fb}^*(n_c,k) W^{-n_c T_T(l,k,m)}, \quad l=1,...,N_T \text{ et } k=1,...,K \ ,$$

et où $N_T$ et le nombre de trajets sélectionnés ;
où $S_{fb}(n_c,k)$ est le signal reconsruit pour là nc-ième sous-porteuse et le kième utilisateur ;
et avec :

$$
Q = \begin{pmatrix}
q(1,1,1,1) & ... & q(1,N_T,1,1) & ... & q(1,1,K,1) & ... & q(1,N_T,K,1) \\
... & & ... & & ... & & ... \\
q(N_T,1,1,1) & ... & q(N_T,N_T,1,1) & & q(N_T,1,K,1) & ... & q(N_T,N_T,K,1) \\
... & & ... & ... & & & ... \\
q(1,1,1,K) & ... & q(1,N_T,1,K) & ... & q(1,1,K,K) & ... & q(1,N_T,K,K) \\
... & & ... & & & & ... \\
q(N_T,1,1,K) & ... & q(N_T,N_T,1,K) & ... & q(N_T,1,K,K) & ... & q(N_T,N_T,K,K)
\end{pmatrix}
$$

où

$$q(l_1,l_2,k_1,k_2) = \sum_{n_c=0}^{N_C-1} S_{fb}(n_c,k_1) S_{fb}^*(n_c,k_2) W^{-n_c(T_T(l_1,k_1,m)-T_T(l_2,k_2,m))} \ .$$

**6.** Procédé selon l'une quelconque des revendications précédentes, **caractérisé en ce qu'**il comprend l'étape supplémentaire consistant, au sein d'une itération donnée, à tenir compte d'un ensemble d'évaluations de canal, chacune effectuée sur un symbole différent et à interpoler ces évaluations de canal pour établir une nouvelle estimation de canal en une série de symboles tenant compte des évaluations de canal effectuées sur des symboles voisins.

**7.** Procédé selon la revendication précédente, **caractérisé en ce que** l'interpolation supplémentaire est effectuée par groupes de sous-porteuses de même indice pour interpoler temporellement.

**8.** Procédé selon la revendication 6, **caractérisé en ce que** l'interpolation supplémentaire est une interpolation effectuée par groupes de trajets de même indice pour interpoler temporellement.

**9.** Procédé selon l'une quelconque des revendications 6 à 8, **caractérisé en ce que** l'interpolation supplémentaire est une interpolation polynominale.

**10.** Procédé selon l'une quelconque des revendications 6 à 8, **caractérisé en ce que** l'interpolation supplémentaire est une interpolation polynomiale réalisée en utilisant les formules :

$$f(m) = C_{N_p-1} m^{N_p-1} + C_{N_p-2} m^{N_p-2} + \ldots + C_1 m + C_o$$

avec $C_{np}$, $n_p = 1, \ldots N_P$, les coefficients du polynôme, et $f(m)$ la valeur du canal à la position de symbole m.

$$\begin{pmatrix} C_{N_P-1} \\ C_{N_P-1} \\ \ldots \\ C_0 \end{pmatrix} = \Pi_1(n_g) \begin{pmatrix} f(m_P(1)) \\ f(m_P(2)) \\ .. \\ f(m_P(N_p)) \end{pmatrix} ;$$

à la première itération,
où

$$\Pi_1(n_g) = \begin{pmatrix} (m_P(1,n_g))^{N_P-1} & (m_P(1,n_g))^{N_P-2} & \ldots & m_P(1,n_g) & 1 \\ (m_P(2,n_g))^{N_P-1} & (m_P(2,n_g))^{N_P-2} & & m_P(2,n_g) & 1 \\ \ldots & & & & \ldots \\ (m_P(N_P,n_g))^{N_P-1} & (m_P(N_P,n_g))^{N_P-2} & \ldots & m_P(N_P,n_g) & 1 \end{pmatrix}^{-1} ,$$

et

$$\begin{pmatrix} C_{N_P-1} \\ C_{N_P-1} \\ \ldots \\ C_0 \end{pmatrix} = \Pi_{iter}(n_g) \begin{pmatrix} f(m_P(1)) \\ \ldots \\ f(m_P(N_p)) \\ f(m_D(1)) \\ \ldots \\ f(m_D(N_D)) \end{pmatrix}$$

pour les itérations suivantes,
où $\Pi_{iter}(n_g) = (M_{n_g}{}^T M_{n_g})^{-1} M_{n_g} T$,
avec

$$M_{n_g} = \begin{pmatrix} \left(m_P(1,n_g)\right)^{N_P-1} & \left(m_P(1,n_g)\right)^{N_P-2} & \dots & m_P(1,n_g) & 1 \\ \dots & \dots & & \dots \\ \left(m_P(N_P,n_g)\right)^{N_P-1} & \left(m_P(N_P,n_g)\right)^{N_P-2} & & m_P(N_P,n_g) & 1 \\ \left(m_D(1)\right)^{N_P-1} & \left(m_D(1)\right)^{N_P-2} & & m_D(1) & 1 \\ \dots & & & \dots \\ \left(m_D(N_D)\right)^{N_P-1} & \left(m_D(N_D)\right)^{N_P-2} & & m_D(N_D) & 1 \end{pmatrix}.$$

**11.** Dispositif de réception radiotéléphonique par turbo-estimation sur des symboles (100, 150, 200) comportant chacun des informations correspondant à plusieurs canaux (h) et plusieurs trajets ($n_t$) par canal, comportant des moyens qui établissent, au cours d'au moins une des boucles d'itération successives, une comparaison entre données reçues et données de retour, après une sélection effectuée en conservant seulement les informations correspondant à une partie des trajets ayant une amplitude plus forte relativement aux autres trajets, **caractérisé en ce que** le dispositiif inclut des moyens qui évaluent l'amplitude de tels trajets au sein d'un même symbole (150) pour cette sélection à l'aide d'une interpolation sur les amplitudes des trajets d'autres symboles (100, 200).

Pilot ・・・ Pilot Data ・・・ Data Pilot ・・・ Pilot Data ・・・ Data Pilot ・・・ Pilot

1     $N_G$   1     x   1     $N_G$   x+1     $N_D$   1     $N_G$

$N_p \times N_G$

# FIG.1

Structure de trame

Signal reçu     220     *Bits codés estimés*     230     *Bits d'information estimés*

Détecteur de symboles

Décodeur de canal

Estimateur de canal

Codeur de canal

250     240

# FIG.2

Récepteur itérative

Canal
Canal
Canal :

10
20

30

Indice
de trajet

1

10
20

30

Indice
de trajet

10

30

20

| P | D | D | ⋯ | D | ⋯ | D | P | D | D | ⋯ | D | P | ⋯ |
|---|---|---|---|---|---|---|---|---|---|---|---|---|---|

100

150

200

FIG.3

FIG.4

EP 1 608 118 A1

**EP 1 608 118 A1**

<table>
<tr><td colspan="2">Office européen<br>des brevets</td><td>RAPPORT DE RECHERCHE EUROPEENNE</td><td>Numéro de la demande<br>EP 04 29 1537</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | FRANZ V ET AL: "ITERATIVE CHANNEL ESTIMATION FOR TURBO-DETECTION" ITG FACHBERICHTE, VDE VERLAG, BERLIN, DE, no. 146, mars 1998 (1998-03), pages 149-154, XP000997637 ISSN: 0932-6022 * page 152, section 4 * ----- | 1-4,6-9, 11 | H04L25/02 |
| Y | STRAUCH P ET AL: "Iterative channel estimation for EGPRS" 52ND IEEE VEHICULAR TECHNOLOGY CONFERENCE, vol. 5, 24 septembre 2000 (2000-09-24), pages 2271-2277, XP010522184 PISCATAWAY, NJ, USA * pages 2272-2273, section 3 * ----- | 1-4,6-9, 11 | |
| Y | FR 2 671 923 A (TELEDIFFUSION FSE ; FRANCE ETAT (FR)) 24 juillet 1992 (1992-07-24) * page 2, ligne 25 - page 4, ligne 27 * * page 10, ligne 26 - page 13, ligne 6 * ----- | 1-4,6-9, 11 | |
| Y | EP 0 935 372 A (SAMSUNG ELECTRONICS CO LTD) 11 août 1999 (1999-08-11) * abrégé; figure 4a * ----- | 1-4,6-9, 11 | DOMAINES TECHNIQUES RECHERCHES (Int.Cl.7)<br>H04L |

Le présent rapport a été établi pour toutes les revendications

| Lieu de la recherche | Date d'achèvement de la recherche | Examinateur |
|---|---|---|
| La Haye | 17 novembre 2004 | Koukourlis, S |

**ANNEXE AU RAPPORT DE RECHERCHE EUROPEENNE
RELATIF A LA DEMANDE DE BREVET EUROPEEN NO.**

EP 04 29 1537

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

17-11-2004

| Document brevet cité au rapport de recherche | | Date de publication | Membre(s) de la famille de brevet(s) | | Date de publication |
|---|---|---|---|---|---|
| FR 2671923 | A | 24-07-1992 | FR | 2671923 A1 | 24-07-1992 |
| | | | AU | 655959 B2 | 19-01-1995 |
| | | | AU | 1025092 A | 23-07-1992 |
| | | | CA | 2059455 A1 | 18-07-1992 |
| | | | DE | 69228842 D1 | 12-05-1999 |
| | | | DE | 69228842 T2 | 25-11-1999 |
| | | | DE | 69232580 D1 | 29-05-2002 |
| | | | DE | 69232580 T2 | 27-03-2003 |
| | | | EP | 0499560 A1 | 19-08-1992 |
| | | | EP | 0820172 A2 | 21-01-1998 |
| | | | ES | 2176584 T3 | 01-12-2002 |
| | | | JP | 3044899 B2 | 22-05-2000 |
| | | | JP | 5075568 A | 26-03-1993 |
| | | | US | 5307376 A | 26-04-1994 |
| EP 0935372 | A | 11-08-1999 | GB | 2333015 A | 07-07-1999 |
| | | | CN | 1228654 A | 15-09-1999 |
| | | | EP | 0935372 A2 | 11-08-1999 |

EPO FORM P0460

Pour tout renseignement concernant cette annexe : voir Journal Officiel de l'Office européen des  brevets, No.12/82